# EUROPEAN PATENT SPECIFICATION

(11) **EP 1 161 365 B1**
(45) Date of publication and mention of the grant of the patent: **03.12.2003**
(21) Application number: 00911244.2
(22) Date of filing: 01.03.2000
(51) Int. Cl.: B64F 1/31, A61G 3/06

(54) **AIRPORT VEHICLE FOR EMBARKING PASSENGERS AND GOODS**
FLUGHAFENFAHRZEUG ZUR AUFNAHME VON FLUGGÄSTEN UND LASTEN
VEHICULE AEROPORTUAIRE POUR EMBARQUER DES PASSAGERS ET DES BIENS

(30) Priority: 16.03.1999 IT RM990160
(43) Date of publication of application: 12.12.2001
(73) Proprietor: Airport Equipment S.R.L., 00040 Ariccia (FR)
(72) Inventor: CESARINI, Franco, I-00040 Ariccia (IT)
(74) Representative: Cavattoni, Fabio
(86) International application number: IT0000066
(87) International publication number: WO00055041

(56) References cited:
- EP-A- 0 443 898
- WO-A-98/13259
- AT-B- 396 781
- FR-A- 2 534 200

## Description

This invention relates to a transport vehicle having a front door for embarking and landing people or for loading and unloading goods generally, and/or for airport use, according to the preamble of claim 1.

The existing means of transport (in general motor vehicles, lorries, buses, etc.) have the body platform at a medium height from ground of 1,000 - 1,700 mm. In order that either goods or people, in particular handicapped people, enter the transport vehicle, external equipment, such as lifting trucks and/or movable platforms by means of hydraulic devices, are used. These external equipment, that are normally situated in the rear of the vehicle, are embodied or not to the same means of transport.

As shown in EP 0 443 898, an existing type of vehicle for transporting goods and/or people, which is provided with a system for loading/unloading goods and/or people into or from aircraft, comprises a driver's cab fixed to a vehicle frame, a raisable box for housing passengers and/or goods that is liftable from the vehicle frame, a covered opening door, projecting from the forepart of the housing box, an extensible gangway to the aircraft fitted in the front of said opening door, and a loading cabin or platform connected to the housing box, in the rear of and vertically movable with respect to the same, for loading goods and/or people from the ground level. In a known way, the housing box, the opening door, the gangway and the loading cabin are liftable together by means of a pantograph lifting system fitted on the vehicle frame. The vehicle frame with the driver's cab is stably placed on the ground in a lifting operation not through the wheels of vehicle, but conventionally by means of at least four hydraulic jacks, two for each side of the transport vehicle, which spread the load on the ground relieving the suspensions and the wheels of the transport vehicle.

The above mentioned transport vehicle exhibits some drawbacks and particularly has large overall dimensions.

A worker, who sits on the driver's seat, at the same time he drives the vehicle, when the vehicle is moving, has to see to the execution and the control of several operations connected to the lifting of the raisable housing box and to the movement of the front gangway and the movable rear loading cabin; as well as the worker has to monitor the correct embarking and landing of passengers or the loading and unloading of the goods. In the above mentioned vehicle it is difficult to work as the operating controls are located in many different places in the vehicle, that are also far from each other, so that the worker has to move to the various places in the vehicle. Further, the vehicle known has a longitudinal dimension greater than what is necessary as the rear loading cabin works only to lift passengers and goods from the ground to embark them into the raisable housing box and is not a place useful to house passengers or goods during their transportation.

An object of the present invention is to permit the worker, who sits on the driver's seat in the vehicle cab, in the best possible way to control and monitor at close range all the operations of the embarking and landing of passengers or the loading and unloading of goods carried on at the ground level or at a level with an entrance or loading opening in general and of an aircraft in particular.

Another object of the present invention is to reduce the overall dimensions of a transport vehicle of the type above mentioned, by optimizing available spaces without worsening their functionality.

According to the present invention, there is provided a transport vehicle having a frontal opening for embarking and landing people and/or for loading and unloading goods in general, and/or for airport use, comprising a vehicle frame, fitted with hydraulic jacks to lean on the ground, a driver's cab, a raisable box by means of any kind of lifting system, for example a pantograph system with hydraulic cylinder or the like, from the level of the vehicle frame to an entrance and loading opening in general or to the entrance door or to the loading opening of an aircraft, a frontal door opening to enter the raisable box, a gangway connected or not in the front of the door opening and extensible toward the entrance and loading opening in general or to the entrance door or to the loading opening of an aircraft, wherein the driver's cab and the door opening for embarking and landing passengers and for loading and unloading goods from the raisable box and the ground are contained in one forepart of the transport vehicle, in the front of the raisable box. Such a forepart of the transport vehicle is liftable together with the raisable box with respect to the vehicle frame and is able to be lowered with respect to the raisable box from a position in which the driver's cab, the door opening and the gangway are at the same level of the raisable box to a position in which the driver's cab, the door opening and the gangway lean on the ground.

The present invention will be now described with reference to a preferred embodiment thereof, notwithstanding it will be appreciated that many changes may be carried on without departing from the scope of the invention, that is explained in connection with the figures of the accompanying drawing, in which:
Figure 1 shows a diagrammatic side view, partially in section, of the transport vehicle according to the invention in a raised position represented with a continuous line, in a transfer position represented with dotted line, and in a lowered position at the ground represented with dash-dotted line; and
Figure 2 shows a diagrammatic front view of the transport vehicle in Figure 1 in a transfer position.

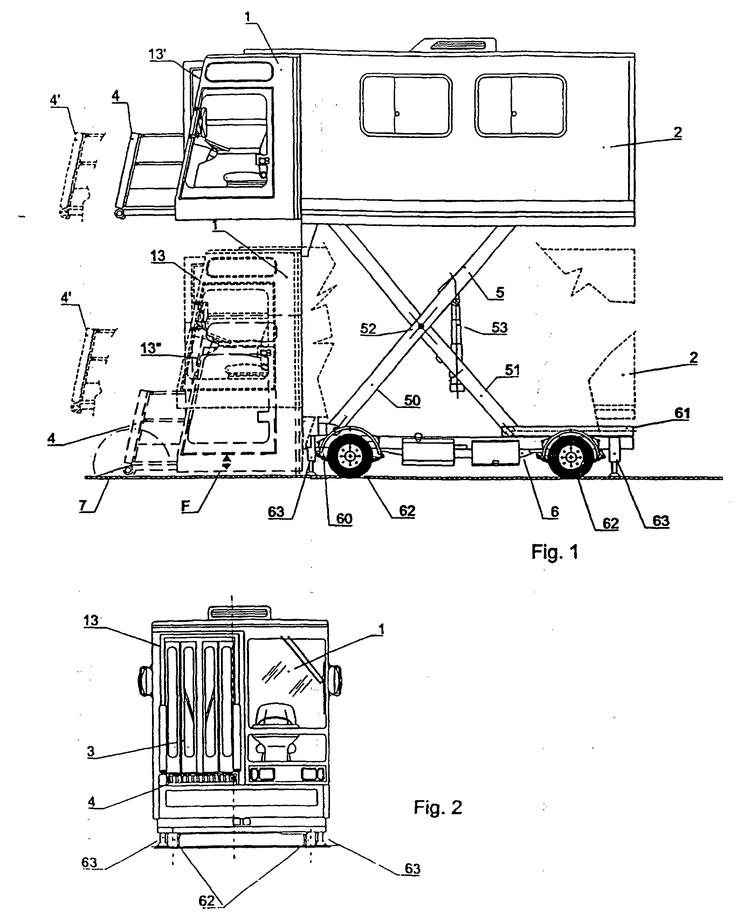

With reference to the figures, the transport vehicle according to the invention is shown as a whole in Figure 1. Therein, a driver's cab is denoted as 1, a raisable box having windows or not, for passengers or goods, is denoted as 2, a covered door as 3, an extensible gangway as 4, a pantograph lifting system as 5, and a transport vehicle frame as 6.

The raisable box 2 is mounted on any type of lifting system 5, constituted in this case for example by at least a double couple of rods side by side with relative driving systems. In Figure 1 only two rods 50, 51 are shown articulated together around a pivot 52 by means of at least a telescopic hydraulic cylinder 53 fitted between the rods 50 and 51 to permit their mutual opening and closure as scissors. In its lower part the rod 50 is hinged on a pivot 60 to the vehicle frame 6. The rod 51 is constrained in its lower part to slide along a horizontal guide 61 made on the vehicle frame 6. Vice versa, on the upper part, the end of the rod 51 is hinged on a pivot, and the end of the rod 51 is constrained to slide along a horizontal guide (not shown) similar to the horizontal guide 61 of the vehicle frame 6 for the rod 51.

The vehicle frame 6, that is mounted on wheels generically denoted as 62, is also provided conventionally with hydraulic jacks generically denoted as 63, adapt to support the weight of the raisable box and its load in the lifting operation, spreading it evenly on the ground, without any risk of instability.

The driver's cab 1 communicates with or is however facing the door opening 3 for embarking and landing passengers or for loading and unloading goods between the raisable box and an aircraft, and between the raisable box and the ground.

Preferably, the driver's cab 1 and the door opening 3 form one room in one vehicle forepart, denoted as a whole as 13, that is situated in front of the raisable box 2.

This forepart 13 of the transport vehicle, comprising the driver's cab 1 and the door opening 3, is connected to the raisable box 2 to be lifted to the high position 13' shown with a continuous line in Figure 1, starting from the position 13, preparatory to the embarkation and close to the running position represented with dotted lines in the same Figure 1 and with continuous line in the front view in Figure 2 and with respect to the frame 6 of the transport vehicle.

According to the invention, the gangway 4 is mounted in the front of the door opening 3 and is either longitudinally extensible, as represented with dotted line in the sectioned part 4' of Figure 1, or laterally movable, to lean on and be aligned to an entrance and loading opening in general, or to an entrance or loading door of an aircraft (not shown).

The forepart 13 is vertically movable with respect to the raisable box 2 downwards from the position 13, in which the driver's cab and the door opening are at the same level of the raisable box, to a lower position 13" (according to the doubly pointed arrow F) in which the gangway 4 is leaned on the ground.

The gangway 4, integral in the front of the door opening 3, is fitted with a folding board 7 hinged in the lower part on the front end of the gangway 4.

Alternately the driver's cab 1 and the door opening 3 may be comprised of two different elements that are side by side but separate, movable independently the one from the other.

As to the operation of the transport vehicle in accordance with the invention, the worker, who drives the vehicle, approaches the aircraft in its running position and, near it, prepares, for example, any operation of unloading of goods, people or a handicapped person, by lowering, if necessary, the piston of the hydraulic jacks 63. At this moment, the worker actuates the lifting system 5 until the forepart 13 of the transport vehicle, together with the raisable box 2, reaches the loading room or the door opening of the aircraft (position 13'). From the door opening 3 of the frontal portion 13 the gangway 4 is extended to lean on the aircraft or other entrance and loading opening, the gangway board 7 is folded outward, and goods, passengers, dollies or invalid carriages may pass over the gangway 4, from here to the door opening 3 and then into the raisable box housing passengers and/or goods.

The worker approaches and controls that the operations go on correctly without moving on the equipment to more different places also far the one from the other. In this way, by virtue of the arrangement according to the invention, only one worker can carry out the whole cycle of loading, unloading and transfer.

Once goods and/or passengers, also handicapped, are in the raisable box, the worker actuates downwards the lifting system 5 until the position shown in Figure 2 is reached. After the withdrawal of the piston of hydraulic jacks 63 upwards, if operated before, the worker drives the transport vehicle to the transfer place where he permits passengers, dollies or invalid carriages to enter the door opening 3 and controls the lowering of the forepart 13 to its lowest position 13" in contact with the ground.

The board 7 is folded outwards and passengers, dollies or invalid carriages pass from the door opening 3 to the gangway 4 and then to the ground.

It is clear that, according to the invention, all this operation happens in the front, directly toward an entrance door of the airport, in the case of an airport use, or from other loading openings in general, such as for example other means of transport, not necessarily aircraft's, or storehouses, fixed structures or storage system and the like.

## Claims

1. Transport vehicle having a frontal opening for embarking and landing people and/or for loading and unloading goods in general, and/or for airport use, comprising a vehicle frame fitted with hydraulic jacks to lean on the ground or other stabilising system, a driver's cab, a raisable box or platform by means of any lifting system from the level of the vehicle frame to an entrance and loading opening in general or to the entrance door or to the loading opening of an aircraft, a frontal door opening to enter the raisable box, a gangway connected in the front of the door opening and extensible toward the entrance and loading opening in general or to the entrance door or to the loading opening of an aircraft, **characterised in that** the driver's cab (1) and the door opening (3) for embarking and landing passengers and for loading and unloading goods from the raisable box (2) and the ground are contained in one forepart (13) of the transport vehicle, in the front of the raisable box (2); the forepart (13) of the transport vehicle being liftable together with the raisable box (2) with respect to the vehicle frame (6) and being able to be lowered with respect to the raisable box (2) from a position in which the driver's cab (1) and the door opening (3), constituting one room, and the gangway (4) are at the same level of the raisable box (2) to a position in which the driver's cab (1), the door opening (3) and the gangway (4) lean on the ground.

2. Transport vehicle according to claim 1, **characterised in that** the driver's cab (1) and the door opening (3) with the gangway (4) constitute separate rooms side by side movable also one by one independently between them, until the door opening (3) with the gangway (4) leans on the ground.

3. Transport vehicle according to claim 2, **characterised in that** the forepart (13) liftable from the ground to the raisable box (2) works specifically as an elevator.

## Patentansprüche

1. Transportfahrzeug mit einer vorderen Öffnung für an Bord gehende und landende Menschen und/oder zum Einladen und Entladen von Waren im Allgemeinen und/oder zum Gebrauch auf einem Flughafen, umfassend einen mit Wagenhebern zur Abstützung auf dem Boden oder einem anderen Stabilisierungssystem ausgestatteten Fahrzeugrahmen, eine Fahrerkabine, eine mittels eines beliebigen Hubsystems von der Höhe des Fahrzeugrahmens aus bis zu einer Einlass- und Ladeöffnung im Allgemeinen oder bis zur Eingangstüre oder bis zur Ladeöffnung eines Flugzeugs anhebbaren Zelle oder Plattform, eine vordere Türöffnung zum Eintritt in die anhebbare Zelle, eine vor der Türöffnung befestigte und in Richtung der Einlass- und Ladeöffnung im Allgemeinen oder bis zur Eingangstüre oder bis zur Ladeöffnung eines Flugzeugs ausfahrbare Gangway, **dadurch gekennzeichnet, dass** die Fahrerkabine (1) und die Türöffnung (3) für an Bord gehende und landende Passagiere und/oder zum Einladen und Entladen von Waren aus der anhebbaren Zelle und vom Boden aus in einem Vorderteil (13) des Transportfahrzeugs vor der anhebbaren Zelle (2) enthalten sind, wobei der Vorderteil (13) des Transportfahrzeugs zusammen mit der anhebbaren Zelle (2) in Bezug zum Fahrzeugrahmen (6) anhebbar ist und in Bezug zur anhebbaren Zelle (2) aus einer Stellung, in der sich die Fahrerkabine (1) und die Türöffnung (3), die einen Raum bilden, und die Gangway (4) in derselben Höhe wie die anhebbare Zelle (2) befinden, bis in eine Stellung abgesenkt werden kann, in der sich die Fahrerkabine (1), die Türöffnung (3) und die Gangway (4) auf dem Boden abstützen.

2. Transportfahrzeug nach Anspruch 1, **dadurch gekennzeichnet, dass** die Fahrerkabine (1) und die Türöffnung (3) mit der Gangway (4) getrennte Räume nebeneinander bilden, die unter sich auch einzeln unabhängig beweglich sind, bis sich die Türöffnung (3) mit der Gangway (4) auf dem Boden abstützt.

3. Transportfahrzeug nach Anspruch 2, **dadurch gekennzeichnet, dass** der vom Boden aus bis zur anhebbaren Zelle (2) anhebbare Vorderteil (13) speziell als Aufzug arbeitet.

## Revendications

1. Véhicule de transport ayant une ouverture frontale pour l'embarquement et le débarquement de personnes et/ou pour le chargement et le déchargement de marchandises en général, et/ou pour une utilisation aéroportuaire, comportant un châssis de véhicule équipé de vérins hydrauliques devant reposer sur le sol ou d'un autre système de stabilisation, une cabine de conducteur, une caisse ou plateforme relevable au moyen d'un système élévateur quelconque depuis le niveau du châssis du véhicule jusqu'à une ouverture d'entrée et de chargement en général ou jusqu'à la porte d'entrée ou jusqu'à l'ouverture de chargement d'un avion, une ouverture de porte avant afin d'entrer dans la caisse relevable, une passerelle reliée à l'avant de l'ouverture de porte et extensible vers l'ouverture d'entrée et de chargement en général ou jusqu'à la porte d'entrée ou jusqu'à l'ouverture de chargement d'un avion, **caractérisé en ce que** la cabine de conducteur (1) et l'ouverture de porte (3) pour l'embarquement et le débarquement de personnes et pour le chargement et le déchargement de marchandises depuis la caisse relevable (2) et le sol sont contenues dans une partie avant (13) du véhicule de transport, à l'avant de la caisse relevable (2); la partie avant (13) du véhicule de transport pouvant être soulevée avec la caisse relevable (2) par rapport au châssis de véhicule (6) et pouvant être abaissée par rapport à la caisse relevable (2) depuis une position dans laquelle la cabine de conducteur (1) et l'ouverture de porte (3), constituant un espace, et la passerelle (4) sont au même niveau de la caisse relevable (2) jusqu'à une position dans laquelle la cabine de conducteur (1), l'ouverture de porte (3) et la passerelle (4) reposent sur le sol.

2. Véhicule de transport selon la revendication 1, **caractérisé en ce que** la cabine de conducteur (1) et l'ouverture de porte (3) avec la passerelle (4) constituent des espaces séparés côte à côte mobiles également un par un de manière indépendante entre eux, jusqu'à ce que l'ouverture de porte (3) avec la passerelle (4) repose sur le sol.

3. Véhicule de transport selon la revendication 2, **caractérisé en ce que** la partie avant (13) pouvant être soulevée depuis le sol jusqu'à la caisse relevable (2) travaille de manière spécifique comme un élévateur.
